# EUROPEAN PATENT APPLICATION

(11) **EP 4 663 643 A1**
(43) Date of publication of application: **17.12.2025**
(21) Application number: 24753091.8
(22) Date of filing: 19.01.2024
(51) Int. Cl.: C07F 7/18, C09D 183/04, C09K 3/18

(54) **ORGANOSILICON COMPOUND, PRODUCT OF HYDROLYTIC CONDENSATION THEREOF, COATING COMPOSITION, AND COATED ARTICLE**

(30) Priority: 07.02.2023 JP 2023016612
(71) Applicant: SHIN-ETSU CHEMICAL CO., LTD., Tokyo 1000005 (JP)
(72) Inventor: TAKAGI Kazunori, Annaka-shi, Gunma 379-0224 (JP); HIROKAMI Munenao, Annaka-shi, Gunma 379-0224 (JP)
(74) Representative: Mewburn Ellis LLP
(86) International application number: PCT/JP2024/001497
(87) International publication number: WO 2024/166645

(57) **Abstract**

An organosilicon compound represented by formula (1), which gives a coating composition having hydrophilic and antifogging properties that have excellent water resistance. 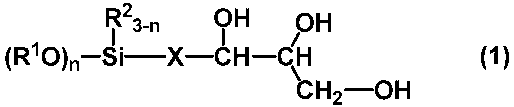 (In formula (1), the R¹ moieties each independently represent a hydrogen atom, a C1-10 alkyl group, or a C6-10 aryl group, the R² moieties each independently represent a C1-10 alkyl group or a C6-10 aryl group, X represents a C2-20 divalent saturated hydrocarbon group which may be separated by a sulfur atom, and n is an integer of 1-3.)

## Description

### TECHNICAL FIELD

The present invention relates to an organosilicon compound, a hydrolytic condensation product thereof, a coating composition containing the organosilicon compound, and a coated article.

### BACKGROUND ART

There has been a growing desire recently for ways to ameliorate the fogging of substrates made of inorganic materials such as glass and organic materials such as plastic. Fogging on a substrate is generally mitigated by coating the substrate surface with a hydrophilic film. For example, coating compositions in which the main ingredient is an organosilicon compound having a sulfobetaine structure with positive charges at the nitrogen atoms within nitrogen-containing heterocyclic moieties are known to be coating agents capable of imparting hydrophilic properties to a substrate (see Patent Documents 1 and 2).

However, coats obtained using such coating compositions lack sufficient water resistance; when they come into contact with water, surface properties such as the foregoing hydrophilic properties and fog resistance sometimes decline. Further improvement is therefore desired.

### PRIOR ART DOCUMENTS

### PATENT DOCUMENTS

Patent Document 1: JP-A 2019-48966
Patent Document 2: JP-A 2022-82176

### SUMMARY OF INVENTION

### TECHNICAL PROBLEM

The present invention was arrived at in light of the above circumstances. An object of the invention is to provide an organosilicon compound which gives a hydrophilic, fog-resistant coating composition having excellent water resistance.

### SOLUTION TO PROBLEM

The inventors have conducted intensive investigations aimed at achieving the above object. As a result, they have discovered that specific organosilicon compounds with a glycerol derivative structure give coating compositions that have an excellent water resistance and are capable of imparting long-lasting hydrophilic and antifogging properties to substrates made of inorganic materials such as glass and organic materials such as plastic. This discovery ultimately led to the present invention.

Accordingly, the invention provides:
1. An organosilicon compound of formula (1) below 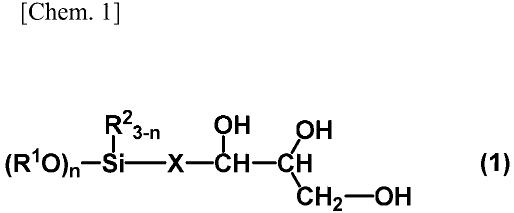 (wherein each R¹ is independently a hydrogen atom, an alkyl group of 1 to 10 carbon atoms or an aryl group of 6 to 10 carbon atoms; each R² is independently an alkyl group of 1 to 10 carbon atoms or an aryl group of 6 to 10 carbon atoms; X is a divalent saturated hydrocarbon group of 2 to 20 carbon atoms which may have an intervening sulfur atom; and n is an integer from 1 to 3);
2. The organosilicon compound of 1 above represented by formula (2) or (3) below 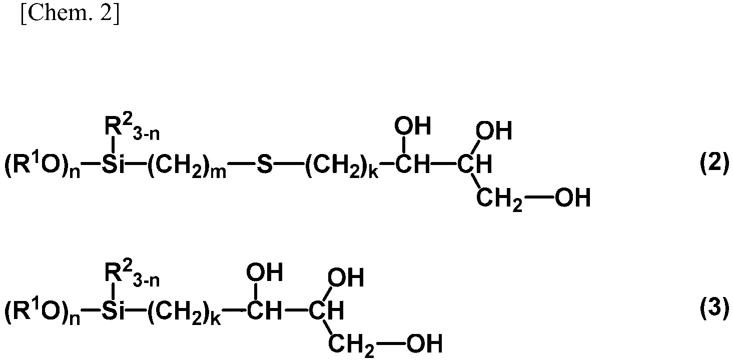 (wherein R¹, R² and n are as defined above, m is an integer from 1 to 10, and k is an integer from 2 to 10);
3. A composition containing a hydrolytic condensation product of the organosilicon compound of 1 or 2 above;
4. A coating composition containing the organosilicon compound of 1 or 2 above, a hydrolytic condensation product of the organosilicon compound, or both; and
5. A coated article having a substrate and a film composed of the coating composition of 4 above formed, either directly or over one or more other layer, on at least one surface of the substrate.

### ADVANTAGEOUS EFFECTS OF INVENTION

The organosilicon compound of the invention gives a coating composition which has excellent water resistance and can impart to glass and other substrates long-lasting hydrophilic and antifogging properties.

### DESCRIPTION OF EMBODIMENTS

The invention is described more fully below.

The organosilicon compound of the invention is represented by formula (1) below.

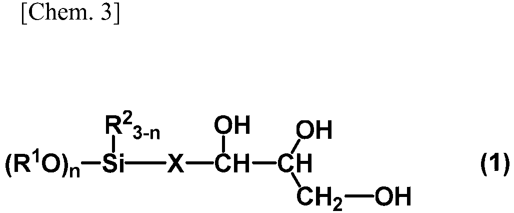

In formula (1), each R¹ independently represents an alkyl group of 1 to 10 carbon atoms, preferably 1 to 8 carbon atoms, and more preferably 1 to 6 carbon atoms, or an aryl group of 6 to 10 carbon atoms, preferably 6 to 8 carbon atoms.

The alkyl group of R¹ may be linear, branched or cyclic. Specific examples include methyl, ethyl, n-propyl, isopropyl, n-butyl, isobutyl, s-butyl, t-butyl, n-pentyl, n-hexyl and cyclohexyl groups.

Specific examples of the aryl group of R¹ include phenyl and tolyl groups.

Of these, alkyl groups of 1 to 3 carbon atoms are preferred as R¹; methyl and ethyl groups are more preferred.

Each R² independently represents an alkyl group of 1 to 10 carbon atoms, preferably 1 to 8 carbon atoms, more preferably 1 to 6 carbon atoms, or an aryl group of 6 to 10 carbon atoms, preferably 6 to 8 carbon atoms. Specific examples of these alkyl groups and aryl groups include the same as the respective groups mentioned for R¹. Of these, a methyl group is preferred.

X represents a divalent saturated hydrocarbon group of 2 to 20 carbon atoms which may have an intervening sulfur atom. Groups of the following formulas are preferred. 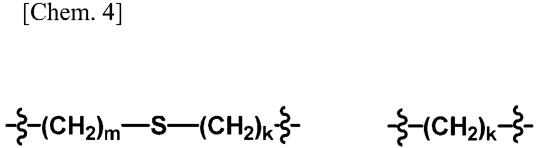 Here, m is an integer from 1 to 10, and k is an integer from 2 to 10.

That is, the organosilicon compound of the invention is preferably a compound of formula (2) or formula (3) below. 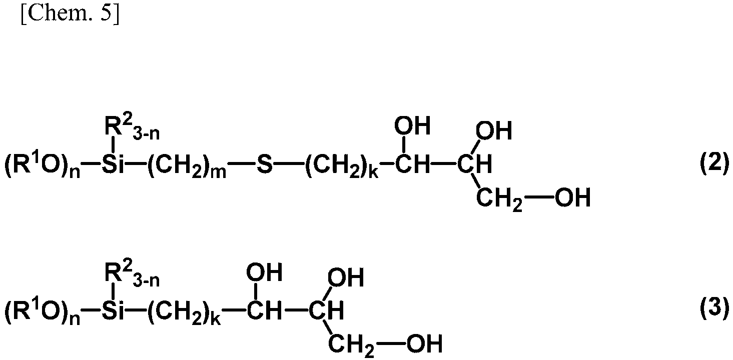 In these formulas, R¹, R², n, m and k have the same meanings as above.

In particular, from the standpoint of the hydroxyl group content per unit weight of the organosilicon compound of the invention and the fog resistance, m is preferably an integer from 1 to 8, and is more preferably 3, and k is preferably an integer from 2 to 6, and is more preferably 5.

Specific, non-limiting, examples of the organosilicon compound of the invention are listed below. 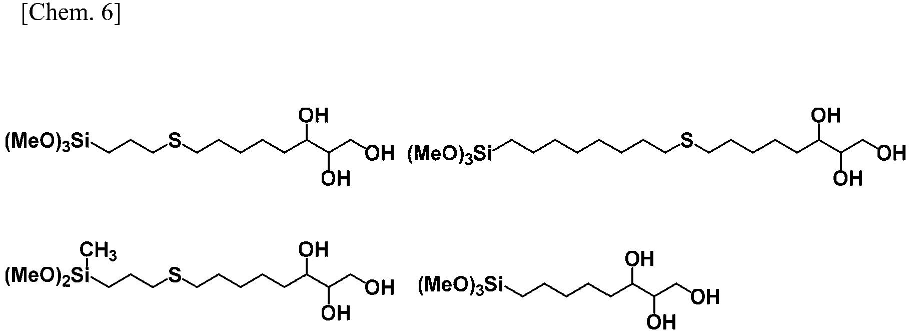 Here and below, Me represents a methyl group.

The organosilicon compound of above formula (1) can be prepared by, for example, the method of subjecting a mercapto group-containing silane compound of formula (I) below and a glycerol derivative of formula (II) below to a thiol-ene reaction, or the method of subjecting a hydrosilane of formula (III) below and a glycerol derivative of formula (II) below to a hydrosilylation reaction. 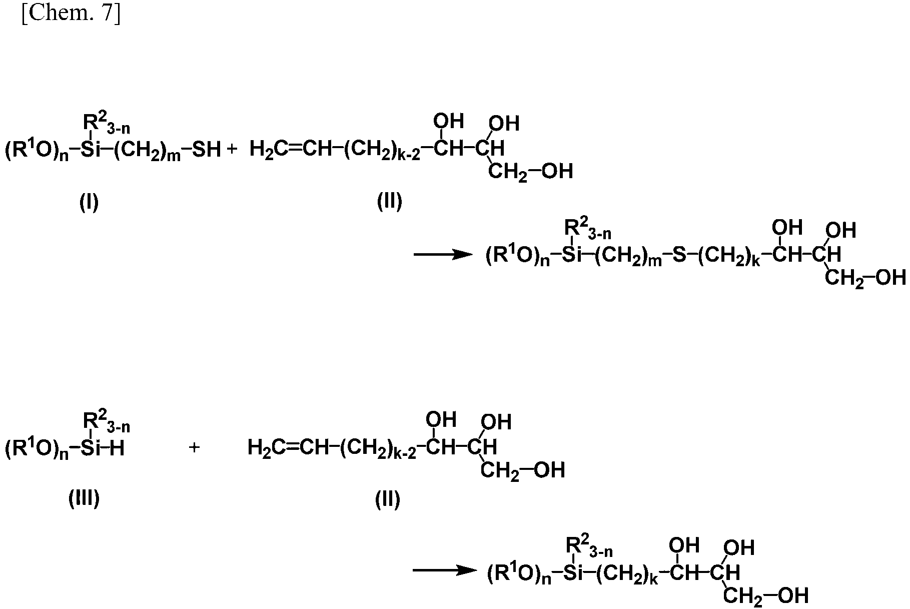 In these formulas, R¹, R², k, m and n have the same meanings as above.

Specific, non-limiting, examples of the mercapto group-containing silane compound of above formula (I) are shown below. Of these, 3-mercaptopropyltrimethoxysilane of structural formula (4) below is preferred.

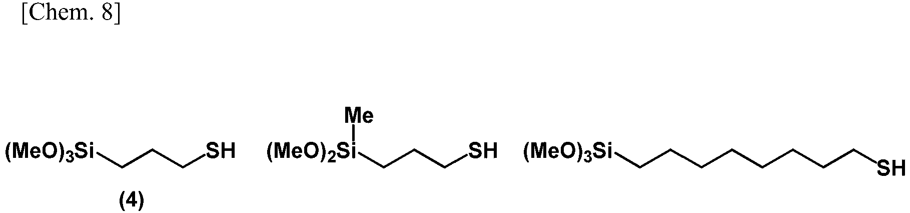

The glycerol derivative represented by above formula (II) is preferably 7-octen-1,2,3-triol.

Specific, non-limiting, examples of the hydrosilane compound of above formula (III) are shown below. Of these, trimethoxysilane of structural formula (5) below is preferred.

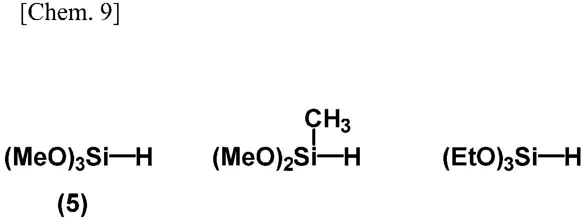

The thiol-ene reaction between a mercapto group-containing silane compound of above formula (I) and a glycerol derivative of above formula (II) may be carried out in accordance with a known thiol-ene reaction.

In the thiol-ene reaction, where necessary, a catalyst such as an organic peroxide or an azo compound may be used.

Specific examples of organic peroxides include benzoyl peroxide, cumene hydroperoxide, di-tert-butyl peroxide, tert-butyl hydroperoxide and dicumyl peroxide.

Specific examples of azo compounds include 2,2'-azobispropane, 2,2'-dichloro-2,2'-azobispropane, 1,1'-azo(methylethyl)diacetate, 2,2'-azobisisobutane, 2,2'-azobisisobutyramide, 2,2'-azobisisobutyronitrile (AIBN), methyl 2,2'-azobis-2-methylpropionate, 2,2'-dichloro-2,2'-azobisbutane, 2,2'-azobis-2-methylbutyronitrile, dimethyl 2,2'-azobisisobutyrate, 3,5-dihydroxymethylphenylazo-2-methylmalonodinitrile, 2,2'-azobis-2-methylvaleronitrile, dimethyl 4,4'-azobis-4-cyanovalerate and 2,2'-azobis-2,4-dimethylvaleronitrile.

The amount of catalyst used per 100 parts by weight of the combined amount of the mercapto group-containing silane compound of formula (I) and the glycerol derivative of formula (II) is preferably from 0.00001 to 10 parts by weight.

In the thiol-ene reaction, a solvent may be used if necessary.

Solvents that may be used include alcohols such as methanol, ethanol, isopropanol and t-butanol; ketones such as acetone and methyl isobutyl ketone; ethers such as dibutyl ether; esters such as ethyl acetate; aromatic hydrocarbons such as toluene; and aliphatic hydrocarbons such as hexane and decane.

The reaction temperature of the thiol-ene reaction is preferably between 0°C and 150°C, more preferably between 50°C and 150°C, and in cases where a solvent is used, should be set according to the boiling point of the solvent. The reaction time is preferably from 1 to 150 hours, and more preferably from 5 to 100 hours.

The ratio between the amount of the mercapto group-containing silane compound of formula (I) and the amount of the glycerol derivative of formula (II) used in the thiol-ene reaction is preferably from 0.75 to 1.25 moles, and more preferably from 0.9 to 1.1 moles, of the glycerol derivative (II) per mole of the mercapto group-containing silane compound (I).

The hydrosilylation reaction between the hydrosilane of formula (III) and the glycerol derivative of formula (II) can be carried out in accordance with a known hydrosilylation reaction.

Examples of hydrosilylation reaction catalysts include platinum black, chloroplatinic acid, alcohol-modified chloroplatinic acid, and complexes of chloroplatinic acid with an olefin, vinyl siloxane, acetylene alcohol or the like. The amount of catalyst added may be suitably selected according to the desired rate of cure, although generally the platinum group metal weight equivalent of the catalyst with respect to the combined weight of the hydrosilane of formula (III) and the glycerol derivative of formula (II) furnished to the reaction is preferably from 0.1 to 500 ppm, and more preferably from 1 to 200 ppm.

The hydrosilylation reaction conditions are not particularly limited, although a reaction temperature of between 20°C and 120°C and a reaction time of from 1 to 8 hours is preferred, and a reaction temperature of between 20°C and 100°C and a reaction time of from 1 to 6 hours is more preferred.

The ratio between the amount of the hydrosilane of formula (III) and the amount of the glycerol derivative of formula (II) used in the hydrosilylation reaction is preferably from 0.75 to 1.25 moles, and more preferably from 0.9 to 1.1 moles, of the glycerol derivative (II) per mole of the hydrosilane (III).

The coating composition of the invention includes one or more compound from among the organosilicon compounds of formula (1) above and hydrolytic condensation products thereof.

In particular, by hydrolytically condensing the inventive organosilicon compound of formula (1), the durability of the resulting film can be further enhanced. When carrying out hydrolytic condensation, another organosilicon compound may be added and co-hydrolytic condensation carried out within a range that does not detract from the objects of the invention.

Specific examples of such other organosilicon compounds include methyltrimethoxysilane, methyltripropoxysilane, methyltriacetoxysilane, methyltributoxysilane, methyltripentoxysiloane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, γ-chloropropyltrimethoxysilane, γ-chloropropyltriethoxysilane, γ-chloropropyltriacetoxysilane, 3,3,3-trifluoropropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-mercaptopropylmethyldimethoxysilane, γ-mercaptomethyldiethoxysilane, γ-ureidopropyltriethoxysilane, γ-ureidopropyltrimethoxysilane, γ-ureidopropyltripropoxysilane, (R)-N-1-phenylethyl-N'-triethoxysilylpropylurea, (R)-N-1-phenylethyl-N'-trimethoxysilylpropylurea, 3-isocyanatopropyltriethoxysilane, trifluoropropyltrimethoxysilane, bromopropyltriethoxysilane, diethyldiethoxysilane, diethyldimethoxysilane, trimethylethoxysilane and trimethylmethoxysilane. These may be used singly, or two or more may be used in combination.

Catalysts exemplified by acids such as hydrochloric acid, sulfuric acid, nitric acid, acetic acid, formic acid, oxalic acid and maleic acid; alkalis such as ammonia, methylamine and ethylamine; and metal salts of hydrochloric acid, sulfuric acid, nitric acid and the like may be used in hydrolytic condensation.

Examples of solvents used in hydrolytic condensation reactions include alcohol-type solvents such as methanol, ethanol, isopropanol, n-butanol, t-butanol, pentanol, ethylene glycol, propylene glycol and 1,4-butanediol; ether-type solvents such as diethyl ether, tetrahydrofuran and dioxane; ketone-type solvents such as acetone and methyl ethyl ketone; aprotic solvents such as dimethylsulfoxide and N,N-dimethylformamide; water; and mixed solvents of these. One of these solvents may be used alone or two or more may be used together.

Of these, alcohol-type solvents and water are preferred.

The reaction temperature of hydrolytic condensation is preferably between 0°C and the boiling point of the solvent, more preferably between 0°C and 120°C, and even more preferably between 5°C and 80°C.

The reaction time is preferably from 10 minutes to 80 hours, more preferably from 30 minutes to 50 hours, and even more preferably from 30 minutes to 2 hours.

The coating composition of the invention may additionally include water, organosilicon compounds other than those mentioned above, alcohols such as methanol and ethanol, and other additives, within ranges that do not detract from the objects of the invention.

Examples of other additives include acids such as hydrochloric acid, sulfuric acid, nitric acid, acetic acid, formic acid, oxalic acid and maleic acid; alkalis such as ammonia, methylamine and ethylamine; inorganic oxides; leveling agent; and surfactants.

In particular, because a hydrophilic film having a high durability can be obtained, it is preferable for the coating composition of the invention to include an inorganic oxide.

Preferred examples of the inorganic oxide include silica fine particles, alumina fine particles, titania fine particles and magnesium fluoride fine particles. The use of these as colloidal solutions is more preferred.

The leveling agent and surfactant are included in order to enhance the film uniformity, and can be suitably selected from among known leveling agents and surfactants, although the use of readily available commercial products is preferred.

The organosilicon compound of formula (1) included in the coating composition of the invention may be reacted with silanol groups on a silica sol (e.g., aqueous silica sols such as the Na⁺-stabilized alkaline sol ST-30L from Nissan Chemical Corporation; and organosilica sols such as Organosilicasol IPA-ST from Nissan Chemical Corporation; ST-30L is preferred).

In this case, specific examples and preferred examples of the solvent used in the reaction include the same solvents as those mentioned above for the hydrolytic condensation reaction.

The reaction temperature is preferably between 0°C and the boiling point of the solvent, more preferably between 0°C and 120°C, and even more preferably between 5°C and 80°C.

The reaction time is preferably from 10 minutes to 80 hours, more preferably from 30 minutes to 50 hours, and even more preferably from 30 minutes to 2 hours.

In this invention, the solution obtained by the above-described method may be used directly as the coating composition or may be used after, if necessary, concentrating the solution, adding a solvent and thereby diluting the solution, or replacing the solvent in the solution with another solvent.

The content of the organosilicon compound of formula (1) and hydrolytic condensate thereof within the coating composition of the invention is not particularly limited. However, from the standpoint of the hydrophilic properties, the content is preferably from 0.0001 to 50 wt%, and more preferably from 0.001 to 30 wt%, of the overall composition.

The coating composition of the invention, when applied onto at least one surface of any of various types of substrates, either directly or over one or more other layer, can impart hydrophilic properties to the substrate.

Specific examples of the material making up the substrate include glass; synthetic resins (polymethyl methacrylate resins, polyethylene terephthalate resins, polybutylene terephthalate resins, polyethylene naphthalate resins, ABS resins, polycarbonate resins, polystyrene resins, epoxy resins, unsaturated polyester resins, melamine resins, diallyl phthalate resins, polyimide resins, urethane resins, nylon resins, polyethylene resins, polypropylene resins, polyvinyl chloride resins, fluorocarbon resins (polytetrafluoroethylene resins, polychlorotrifluoroethylene resins, polyvinylidene fluoride resins, perfluoroalkoxyfluorine resins, tetrafluoroethylene-hexafluoropropylene copolymer resins, ethylene-tetrafluoroethylene copolymer resins, ethylene-chlorotrifluoroethylene copolymer resins, etc.), polybutadiene, polyisopropylene, SBR, nitrile rubber, EPM, EPDM, epichlorohydrin rubber, neoprene rubber, polysulfide rubber, butyl rubber, etc.); metals (iron, aluminum, stainless steel, titanium, copper, brass, alloys of these, etc.), natural fibers such as cellulose, cellulose derivatives, cellulose analogues (chitin, chitosan, porphyran, etc.), cotton, silk, wool, etc.; regenerated fibers such as rayon; semisynthetic fibers such as acetate; synthetic fibers such as vinylon, polyester, nylon, polyethylene, polypropylene, polyurethane and polyaramid fibers; and composite fibers of these fibers (polyester/cotton, etc.). These materials may be in the form of a plate, sheet, film, fibers, etc.

Substrates in which the surface of these substrates has been subjected to chemical conversion treatment, corona discharge treatment, plasma treatment or treatment with an acid or an alkali solution; and decorative plywood in which the substrate proper and the surface layer have been coated with differing types of coatings may also be used. Examples of the other layers include those obtained by polyester resin coating, polyurethane resin coating, aminoalkyd resin coating, rubber coating, spray coating and aqueous wax coating.

A hydrophilic coat can be obtained by applying the coating composition of the invention onto a substrate and optionally heating and drying the applied composition to form a film.

A known method may be used as the coating method. Examples include bar coating, dip coating, spin coating, spray coating, float coating, brush coating, gravure coating, roll transfer methods, blade coating, air knife coating, slit coating, screen coating, inkjet coating and flexographic printing.

### EXAMPLES

Examples of the invention and Comparative Examples are given below by way of illustration, although the invention is not limited by these Examples. The proton magnetic resonance (¹H-NMR) spectrum was measured in heavy methanol (CD₃OD) using the AVANCE III 400 spectrometer from Bruker.

### [1] Preparation of Organosilicon Compounds

### [Example 1-1]

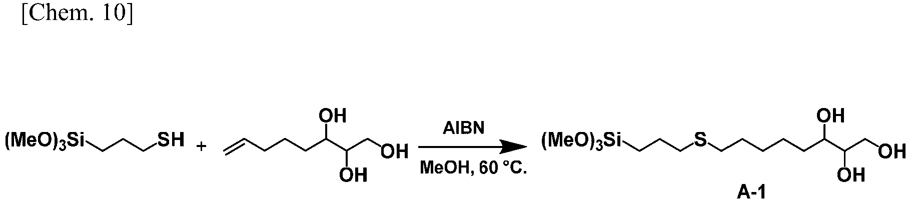

A nitrogen-purged 100 mL reaction vessel was charged with 3.92 g of 3-mercaptopropyltrimethoxysilane, 3.48 g of 7-octen-1,2,3-triol (here and below, from Kuraray Co., Ltd.), 64.2 g of methanol and 0.18 g of azobisisobutyronitrile (AIBN), and the contents were reacted at 60°C for one hour. Following the reaction, filtration was carried out, giving 60 g of a 10 wt% methanol solution of Organosilicon Compound A-1.
¹H-NMR (CD₃OD):
δ 3.69-3.59 ppm (s, 9H, -Si(OCH₃)₃),
3.83-3.28 ppm (m, 4H, OCH-, OCH₂-),
2.62-2.45 ppm (m, 4H, -SCH₂-), 1.79-1.21 ppm (m, 10H, -CH₂-),
0.83-0.72 ppm (m, 2H, -SiCH₂-)

### [Example 1-2]

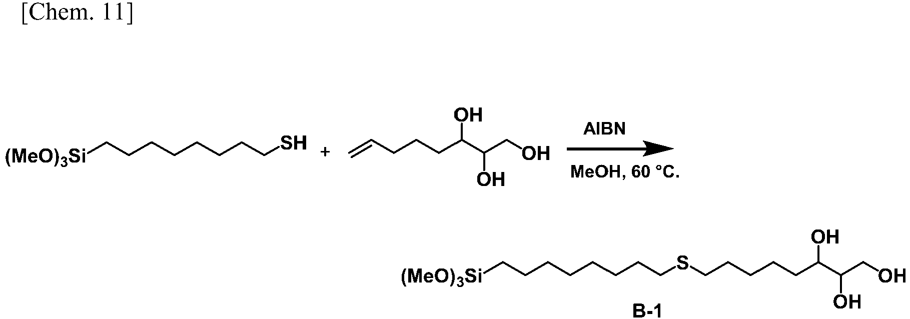

A nitrogen-purged 100 mL reaction vessel was charged with 5.32 g of 8-mercaptooctyltrimethoxysilane, 3.48 g of 7-octen-1,2,3-triol, 76.8 g of methanol and 0.18 g of AIBN, and the contents were reacted at 60°C for one hour. Following the reaction, filtration was carried out, giving 70 g of a 10 wt% methanol solution of Organosilicon Compound B-1.
¹H-NMR (CD₃OD):
δ 3.70-3.59 ppm (s, 9H, -Si(OCH₃)₃),
3.80-3.25 ppm (m, 4H, OCH-, OCH₂-),
2.68-2.47 ppm (m, 4H, -SCH₂-), 1.81-1.20 ppm (m, 20H, -CH₂-),
0.82-0.71 ppm (m, 2H, -SiCH₂-)

### [Example 1-3]

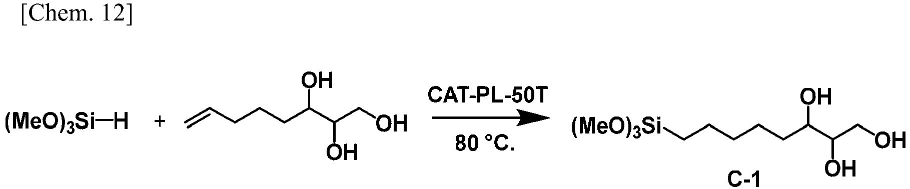

A nitrogen-purged 100 mL reaction vessel was charged with 32.0 g of 7-octen-1,2,3-triol and 0.03 g of the platinum catalyst CAT-PL-50T (Shin-Etsu Chemical Co., Ltd.) and the temperature was raised to 80°C, following which 36.7 g of trimethoxysilane was added dropwise and the contents were reacted at 80°C for 2 hours. Following the reaction, excess trimethoxysilane was removed by distillation and filtration was carried out, giving 50 g of Organosilicon Compound C-1.
¹H-NMR (CD₃OD):
δ 3.68-3.61 ppm (s, 9H, -Si(OCH₃)₃),
3.83-3.26 ppm (m, 4H, OCH-, OCH₂-),
1.75-1.30 ppm (m, 8H, -CH₂-), 0.82-0.73 ppm (m, 2H, -SiCH₂-)

### [Comparative Example 1-1]

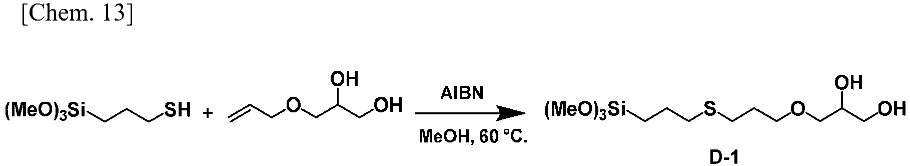

A nitrogen-purged 100 mL reaction vessel was charged with 4.9 g of 3-mercaptopropyltrimethoxysilane, 3.3 g of 3-allyloxy-1,2-propanediol (Tokyo Chemical Industry Co., Ltd.), 74.0 of methanol and 0.24 g of AIBN, and the contents were reacted at 60°C for one hour. Following the reaction, filtration was carried out, giving 68 g of a 10 wt% methanol solution of Organosilicon Compound D-1.

### [Comparative Example 1-2]

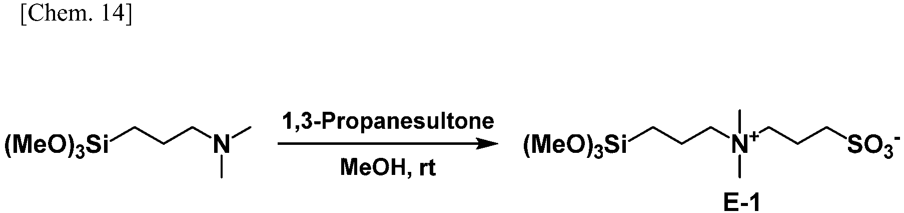

A nitrogen-purged 100 mL reaction vessel was charged with 6.22 g of trimethoxy-3-(N,N-dimethylamino)propylsilane, 2.76 g of 1,3-propanesultone (Tokyo Chemical Industry Co., Ltd.) and 35.9 g of methanol, and the contents were reacted at 25°C for 24 hours. Following the reaction, filtration was carried out, giving 40 g of a 20 wt% methanol solution of Organosilicon Compound E-1.

### [Comparative Example 1-3]

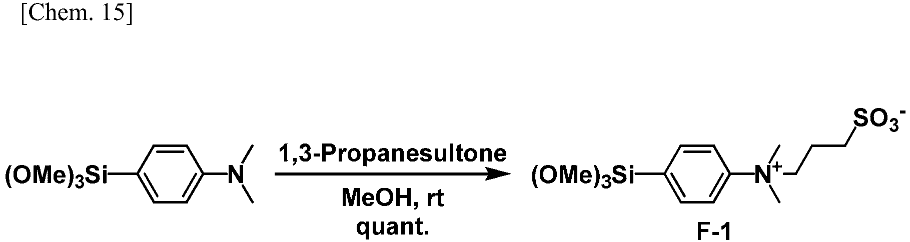

A reactor was charged with 5.07 g of trimethoxy-4-(N,N-dimethylamino)phenylsilane, 1.92 g of 1,3-propanesultone (Tokyo Chemical Industry Co., Ltd.) and 5.31 g of methanol, and the contents were reacted at 25°C for 24 hours. Following the reaction, filtration was carried out, giving 12 g of a 59 wt% methanol solution of Organosilicon Compound F-1.

### [2] Preparation of Coating Compositions

### [Example 2-1]

A nitrogen-purged 200 mL mixing vessel was charged with 50 g of the 10 wt% methanol solution of Organosilicon Compound A-1 obtained in Example 1-1, 49.95 g of deionized water and 0.05 g of acetic acid, and the contents were stirred at 25°C for one hour, giving Coating Composition A-2 as a clear, colorless liquid.

### [Example 2-2]

A nitrogen-purged 200 mL mixing vessel was charged with 50 g of the 10 wt% methanol solution of Organosilicon Compound B-1 obtained in Example 1-2, 49.95 g of deionized water and 0.05 g of acetic acid, and the contents were stirred at 25°C for one hour, giving Coating Composition B-2 as a clear, colorless liquid.

### [Example 2-3]

A nitrogen-purged 200 mL mixing vessel was charged with 5 g of the Organosilicon Compound C-1 obtained in Example 1-3, 94.95 g of deionized water and 0.05 g of acetic acid, and the contents were stirred at 25°C for one hour, giving Coating Composition C-2 as a clear, colorless liquid.

### [Comparative Example 2-1]

A nitrogen-purged 200 mL mixing vessel was charged with 50 g of a 10 wt% methanol solution of Organosilicon Compound D-1 obtained in Comparative Example 1-1, 49.95 g of deionized water and 0.05 g of acetic acid, and the contents were stirred at 25°C for one hour, giving Coating Composition D-2 as a clear, colorless liquid.

### [Comparative Example 2-2]

A nitrogen-purged 200 mL mixing vessel was charged with 25 g of the 20 wt% methanol solution of Organosilicon Compound E-1 obtained in Comparative Example 1-2, 25 g of methanol, 49.95 g of deionized water and 0.05 g of acetic acid, and the contents were stirred at 25°C for one hour, giving Coating Composition E-2 as a clear, colorless liquid.

### [Comparative Example 2-3]

A nitrogen-purged 200 mL mixing vessel was charged with 8.5 g of the 59 wt% methanol solution of Organosilicon Compound F-1 obtained in Comparative Example 1-3, 41.5 g of methanol, 49.95 g of deionized water and 0.05 g of acetic acid, and the contents were stirred at 25°C for one hour, giving Coating Composition F-2 as a clear, colorless liquid.

### [3] Production and Evaluation of Coated Articles

### [Examples 3-1 to 3-3, Comparative Examples 3-1 to 3-3]

Coating compositions A-2 to F-2 obtained in Examples 2-1 to 2-3 and Comparative Examples 2-1 to 2-3 were respectively deposited dropwise in an amount of 0.1 g onto glass plates having a length of 5.0 cm, a width of 15 cm and a thickness of 1.5 mm, and uniformly coated over the entire surface using a nonwoven fabric, following which the applied composition was dried at 105°C for 10 minutes, thereby producing in each case a glass plate with a film thereon composed of the coating composition.

The following tests were carried out on the films thus obtained. The results are shown in Table 1.

### (1) Fog Resistance

The fog resistance of each film was rated as "×" in cases where the film surface fogged up when exhaled on and as "○" in cases where the film surface did not fog up. The fog resistance was rated as "⊚" in cases where the film surface did not fog up when placed for 60 seconds above a 40°C water bath at a height of 3 cm from the water's surface.

### (2) Sag Marks

In the above fog resistance evaluation, after being left at rest above a 40°C water bath for 60 seconds and evaluated for fog resistance, the film was air dried at 25°C for 10 minutes. The surface was then irradiated with a 1,000 lumen flashlight to visually determine whether sag marks are visible on the film surface. Cases in which sag marks were visible are rated as "+"; cases in which sag marks were not visible are rated as "-".

### (3) Water Resistance

Each of the above films was immersed in 25°C water for 24 hours and 240 hours, after which water on the surface was wiped off with a paper wipe. The film was then air dried at 25°C for 10 minutes and the fog resistance evaluation described above was carried out.

### (4) Moisture Resistance

Each of the above films was left at rest for 240 hours in a thermohygrostat (KCL-2000W, Tokyo Rikakikai Co., Ltd.) set to 80°C and 95% RH. The film was then air dried at 25°C for 10 minutes, and the above-described fog resistance evaluation was carried out.

### (5) Heat Resistance

Each of the above films was left at rest for 240 hours in a thermostatic chamber (SPHH-201, Espec Corporation) set to 120°C. The film was then left at rest at 25°C for 10 minutes, and the fog resistance evaluation described above was carried out.

**[Table 1]**

| | Coating composition | Initial fog resistance | Sag marks | Water resistance | | Moisture resistance | Heat resistance |
|---|---|---|---|---|---|---|---|
| | | | | After 24 hrs immersion | After 240 hrs immersion | 240 hrs at 80°C, 95% RH | 240 hrs at 120°C |
| Example 3-1 | A-2 | ⊚ | - | ⊚ | ⊚ | ⊚ | ⊚ |
| Example 3-2 | B-2 | ○ | - | ○ | ○ | ○ | ○ |
| Example 3-3 | C-2 | ⊚ | - | ⊚ | ⊚ | ⊚ | ⊚ |
| Comparative Example 3-1 | D-2 | × | - | × | × | × | × |
| Comparative Example 3-2 | E-2 | ⊚ | + | × | × | × | ○ |
| Comparative Example 3-3 | F-2 | ⊚ | - | ⊚ | × | × | ⊚ |

As shown in Table 1, glass plates treated with the coating compositions in Examples 3-1 to 3-3 exhibited a very long-lasting fog resistance.

On the other hand, in Comparative Example 3-1, the initial fog resistance was inadequate. In Comparative Example 3-2, sag marks were observed, in addition to which the fog resistances after the water resistance test and after the moisture resistance test disappeared, indicating poor durability. In Comparative Example 3-3, the fog resistances after the 240 hour water resistance test and after the moisture resistance test were inadequate.

## Claims

1. An organosilicon compound of formula (1) below 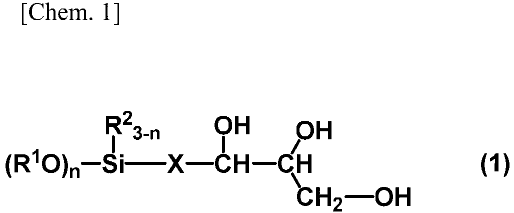 (wherein each R¹ is independently a hydrogen atom, an alkyl group of 1 to 10 carbon atoms or an aryl group of 6 to 10 carbon atoms; each R² is independently an alkyl group of 1 to 10 carbon atoms or an aryl group of 6 to 10 carbon atoms; X is a divalent saturated hydrocarbon group of 2 to 20 carbon atoms which may have an intervening sulfur atom; and n is an integer from 1 to 3).

2. The organosilicon compound of claim 1 represented by formula (2) or (3) below 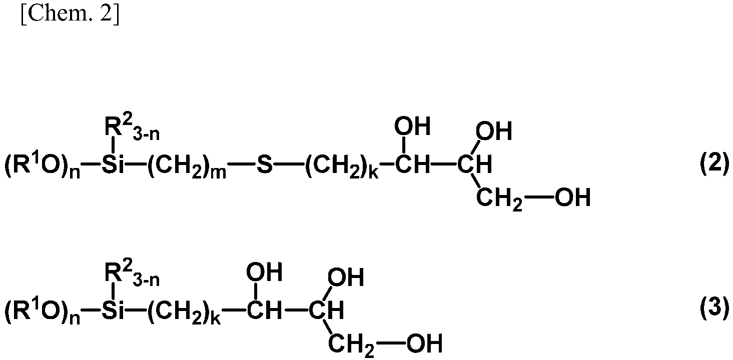 (wherein R¹, R² and n are as defined above, m is an integer from 1 to 10, and k is an integer from 2 to 10).

3. A composition comprising a hydrolytic condensation product of the organosilicon compound of claim 1 or 2.

4. A coating composition comprising the organosilicon compound of claim 1 or 2, a hydrolytic condensation product of the organosilicon compound, or both.

5. A coated article comprising a substrate and a film composed of the coating composition of claim 4 formed, either directly or over one or more other layer, on at least one surface of the substrate.
